# EUROPEAN PATENT APPLICATION

(11) **EP 0 899 075 A1**
(43) Date of publication of application: **03.03.1999**
(21) Application number: 98116353.8
(22) Date of filing: 28.08.1998
(51) Int. Cl.: B29C 45/26

(54) **Disc-molding die**

(30) Priority: 29.08.1997 JP 233868/97
(71) Applicant: Seikoh Giken Co., Ltd., Matsudo-shi, Chiba 270-2214 (JP); SUMITOMO HEAVY INDUSTRIES, LTD., Shinagawa-ku, Tokyo 141-0001 (JP)
(72) Inventor: Sakamoto, Yasuyoshi, Kamagaya-shi, Chiba 273-0123 (JP); Hatano, Akira, Utsunomiya-shi, Tochigi 321-0132 (JP)
(74) Representative: Boeters, Hans Dietrich, Dr.

(57) **Abstract**

Disclosed is a disc-molding die including: a stationary-side mirror-surface plate (16); a stationary-side guide ring (78) attached to the stationary-side mirror-surface plate (16) so as to surround the stationary-side mirror-surface plate and adapted to position the stationary-side mirror-surface plate; a movable-side mirror-surface plate (36) adapted to define a cavity with the stationary-side mirror-surface plate (16); and a movable-side guide ring (38) attached to the movable-side mirror-surface plate (36) so as to surround the movable-side mirror-surface plate and adapted to position the movable-side mirror-surface plate and to effect alignment with the stationary-side guide ring (78). At least one of the stationary-side guide ring (78) and the movable-side guide ring (38) is supported so as to be movable relative to the corresponding mirror-surface plate and urged toward the other guide ring. In a die-opened state, at least one of the stationary-side guide ring (78) and the movable-side guide ring (38) is urged toward the other guide ring. Thus, during die closing, immediately before the die closing is completed, press-fit engagement begins between taper surfaces (S1,S2) of the stationary-side and movable-side guide rings, i.e., alignment begins between the stationary-side and movable-side guide rings. Also, during die opening, immediately after the die opening begins, alignment is still maintained between the stationary-side and movable-side guide rings.

## Description

### BACKGROUND OF THE INVENTION

### Field of the invention:

The present invention relates to a disc-molding die used for molding discs.

### Description of the related art:

Conventionally, when a disc substrate is to be molded in an injection molding machine, resin supplied to a heating cylinder is heated and melted therein and then charged into a cavity formed in a disc-molding die. The molten resin is then hardened to obtain the disc substrate.

The disc-molding die is composed of a stationary die assembly and a movable die assembly. A die clamping apparatus causes the movable die assembly to come in contact with and separate from the stationary die assembly, thereby performing die closing, die clamping, and die opening. In order to align the stationary die assembly with the movable die assembly, guide rings are respectively disposed on the assemblies.

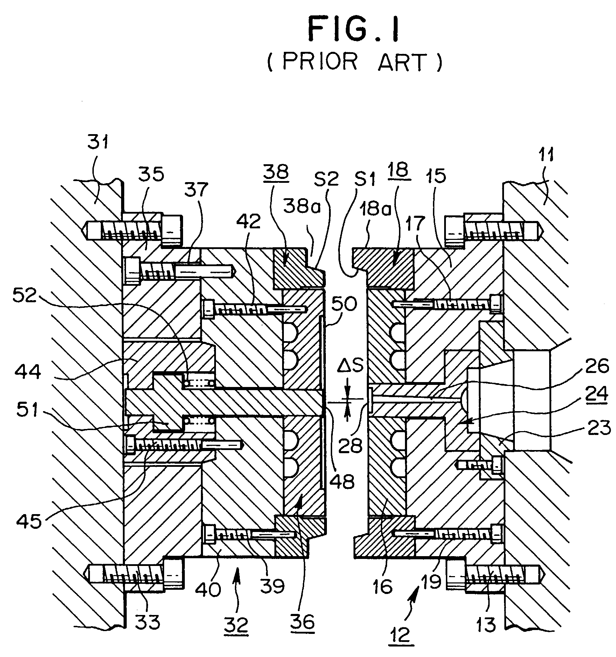

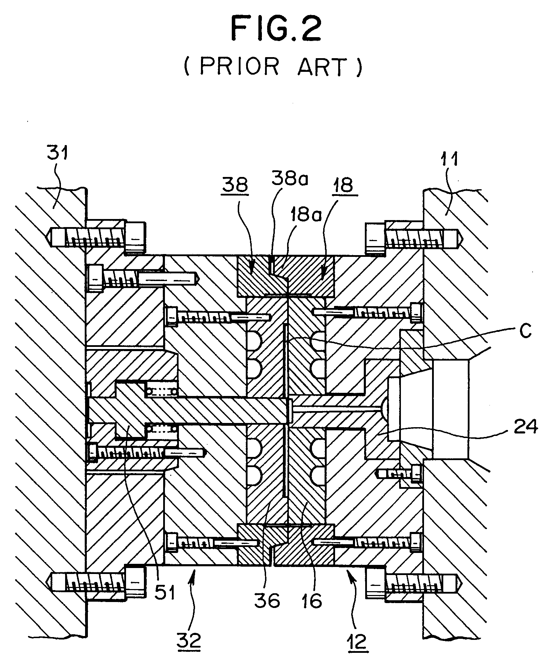

FIG. 1 shows a first conventional disc-molding die in its opened state. FIG. 2 shows the first conventional disc-molding die in its closed state.

In FIGS. 1 and 2, numeral 11 denotes a stationary platen, and numeral 12 denotes a stationary die assembly attached to the stationary platen by use of bolts 13. The stationary die assembly 12 is composed of a stationary-side base plate 15, a stationary-side disc plate 16 fixed to the stationary-side base plate 15 by use of bolts 17, a stationary-side guide ring 18 disposed to surround the stationary-side disc plate 16 and fixed to the stationary-side base plate 15 by use of bolts 19, a locating ring 23 that is disposed on the stationary-platen-side of the stationary-side base plate 15 so as to locate the stationary-side base plate 15 with respect to the stationary platen 11, and a sprue bush 24 disposed adjacent to the locating ring 23.

At the center of the sprue bush 24 is formed a sprue 26 through which passes resin injected from an unillustrated injection nozzle. The sprue bush 24 is disposed such that its tip end faces a cavity C, and a die 28 is formed in the tip end surface.

Moreover, unillustrated stamper plate attachment/removal bushes, a stationary-side air-blow bush, and the like are disposed on the stationary die assembly 12.

Meanwhile, numeral 31 denotes a movable platen, and numeral 32 denotes a movable die assembly attached to the movable platen 31 by use of bolts 33. The movable die assembly 32 is composed of a movable-side base plate 35, an intermediate plate 40 fixed to the movable-side base plate 35 by use of bolts 37, a movable-side disc plate 36 fixed to the intermediate plate 40 by use of bolts 42, a movable-side guide ring 38 disposed to surround the movable-side disc plate 36 and is fixed to the intermediate plate 40 by use of bolts 39, a cylinder 44 that is disposed within the movable-side base plate 35 so as to face the movable platen 31 and is fixed to the intermediate plate 40 by use of bolts 45, and a cut punch 48 that is advanced and retracted by the cylinder 44 and that has a shape corresponding to the die 28.

Moreover, a depression 50 is formed on the surface of the movable-side disc plate 36 facing the stationary-side disc plate 16. Thus, when the movable platen 31 is moved toward the stationary platen 11 through an operation of an unillustrated die clamping apparatus so that the movable-side disc plate 36 and the stationary-side disc plate 16 can abut each other, the depression 50 forms a cavity C.

A piston 51 integrally formed with the cut punch 48 is reciprocatively movably disposed within the cylinder 44. An unillustrated fluid chamber is formed on the rear side (left-hand side in FIGS. 1 and 2) of the piston 51. On the front side (right-hand side in FIGS. 1 and 2) of the piston 51, a cut-punch returning spring 52 is disposed in order to urge the piston 51 rearward.

Accordingly, in the die-closed state, when the piston 51 is advanced (moved to the right in FIG. 2) through feed of a fluid into the fluid chamber, the cut punch 48 is advanced and enters the die 28. As a result, a hole is punched in an unillustrated disc substrate molded within the cavity C.

Unillustrated ejector bushes, ejector pins, a movable-side air-blow bush, and the like are also disposed on the movable die assembly 32.

An annular projection 18a is formed on the stationary-side guide ring 18 at its outer circumferential edge, while an annular depression 38a is formed on the movable-side guide ring 38 at its outer circumferential edge. The annular depression 38a is shaped so as to correspond to the annular projection 18a. The projection 18a and the annular depression 38a are formed so as to face each other. As shown in FIG. 2, when the movable platen 31 is advanced for die closing by means of the die clamping apparatus, press-fit engagement is established between a taper surface S1 formed on the stationary-side guide ring 18 and a taper surface S2 formed on the movable-side guide ring 38. Thus, upon completion of die clamping, the stationary-side guide ring 18 and the movable-side guide ring 38 are aligned with each other, i.e., the stationary die assembly 12 and the movable die assembly 32 are aligned with each other. During injection molding, press-fit engagement is established between the taper surfaces S1 and S2 during every shot.

However, as shown in FIG. 1, in the die-opened state, a gravitational force acts on the movable platen 31 and the movable die assembly 32 due to the structure of the clamping apparatus, so that a deviation ΔS is produced between the centerlines of the stationary and movable die assemblies 12 and 32.

Accordingly, when another die closing is performed, an unusually high contact pressure occurs on portions of the taper surfaces S1 and S2, causing potential damage to the stationary-side guide rings 18 and the movable-side guide ring 38.

In order to cope with the above problem, there is conventionally proposed a disc-molding die in which guide posts are disposed between the stationary die assembly 12 and the movable die assembly 32.

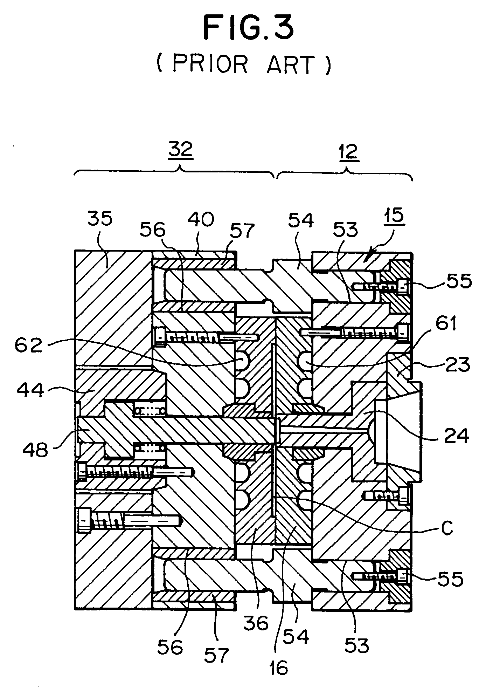

FIG. 3 is a sectional view showing a second conventional disc-molding die having guide posts.

In FIG. 3, numeral 12 denotes a stationary die assembly. The stationary die assembly 12 is composed of a stationary-side base plate 15, a stationary-side disc plate 16, a locating ring 23, and a sprue bush 24.

Meanwhile, numeral 32 denotes a movable die assembly. The movable die assembly 32 is composed of a movable-side base plate 35, an intermediate plate 40, a movable-side disc plate 36, a cylinder 44, and a cut punch 48. The movable-side disc plate 36, together with the stationary-side disc plate 16, forms a cavity C at the time of die closing and at the time of die clamping.

By means of grinding, four (only two are shown in FIG. 3) guide post holes 53 are formed in the stationary-side base plate 15 along a circle that is concentric with the stationary die assembly 12. Guide posts 54 are press-fitted into the corresponding guide post holes 53 and are fixed to the stationary-side base plate 15 by use of bolts 55.

By means of grinding, guide bush holes 56 are formed in the intermediate plate 40 at positions corresponding to the guide post holes 53. Guide bushes 57 are fixedly press-fitted into the corresponding guide bush holes 56. During die closing, the guide posts 54 enter unillustrated ball bearing portions of the guide bushes 57, whereby the stationary die assembly 12 and the movable die assembly 32 are aligned with each other.

Temperature control water passages 61 and 62 are formed in the stationary-side disc plate 16 and a movabel-side disc plate 36, respectively. Temperature control water is fed into the temperature control water passages 61 and 62 so as to cool the stationary-side disc plate 16 anda movable-side disc plate 36, respectively.

However, the conventional disc-molding die suffers a pitch error between the guide posts 54 and the guide bushes 57 when molding involves the occurrence of a temperature difference between the stationary die assembly 12 and the movable die assembly 32. Thus, eccentric wear occurs on the guide posts 54 and the guide bushes 57.

As a result, not only is the durability of the disc-molding die impaired, but also wear particles generated through eccentric wear adhere to an inner surface of the cavity C, an unillustrated molded disc substrate, or the like, resulting in a disc substrate defect.

### SUMMARY OF THE INVENTION

An object of the present invention is to solve the above-mentioned problems in the conventional disc-molding dies and to provide a disc-molding die capable of aligning a stationary die assembly and a movable die assembly with each other, enhancing durability thereof, and molding a defect-free disc substrate.

To achieve the above object, the present invention provides a disc-molding die which comprises a stationary-side mirror-surface plate; a stationary-side guide ring attached to the stationary-side mirror-surface plate so as to surround the stationary-side mirror-surface plate and adapted to position the stationary-side mirror-surface plate; a movable-side mirror-surface plate adapted to define a cavity with the stationary-side mirror-surface plate; and a movable-side guide ring attached to the movable-side mirror-surface plate so as to surround the movable-side mirror-surface plate and adapted to position the movable-side mirror-surface plate and to effect alignment with the stationary-side guide ring.

Also, at least one of the stationary-side guide ring and the movable-side guide ring is supported so as to be movable relative to the corresponding mirror-surface plate and urged toward the other guide ring.

In a die-opened state, at least one of the stationary-side guide ring and the movable-side guide ring is urged toward the other guide ring. Thus, during die closing, immediately before the die closing is completed, press-fit engagement begins between a taper surface of the stationary-side guide ring and a taper surface of the movable-side guide ring, so that alignment begins between the stationary-side guide ring and the movable-side guide ring. Also, during die opening, immediately after the die opening begins, alignment is still maintained between the stationary-side guide ring and the movable-side guide ring.

Accordingly, there can be molded a disc substrate which has highly dense and complex pits, grooves, etc. which are likely to cause transfer defects.

Also, even when the die slightly opens along a parting line due to a resin pressure built up within the cavity, alignment is maintained between the stationary-side guide ring and the movable-side guide ring, thereby maintaining parallelism between the stationary-side mirror-surface plate and the movable-side mirror surface plate. Accordingly, a molded disc substrate has a uniform thickness.

Moreover, since guide posts, guide bushes, and the like are not employed, the durability of the disc-molding die can be enhanced, and defect-free disc substrates can be molded.

Another disc-molding die according to the present invention further comprises force application means for urging at least one of the stationary-side guide ring and the movable-side guide ring toward the other guide ring.

In still another disc-molding die accoding to the present invention, the force application means is a compression spring accommodated in a groove that is formed in at least one of the stationary-side guide ring and the movable-side guide ring.

Yet another disc-molding die according to the present invention further comprises restriction means for restricting an amount of movement of at least one of the stationary-side guide ring and the movable-side guide ring to thereby set a movement stroke of at least one of the stationary-side guide ring and the movable-side guide ring.

Yet another disc-molding die accoding to the present invention further comprises a support member for supporting at least one of the stationary-side guide ring and the movable-side guide ring.

### BRIEF DESCRIPTION OF THE DRAWINGS

The structure and features of the disc-molding die according to the present invention will be readily appreciated as the same becomes better understood by referring to the accompanying drawings, in which:
FIG. 1 is a sectional view showing a first conventional disc-molding die in a die-opened state;
FIG. 2 is a sectional view showing the first conventional disc-molding die in a die-closed state;
FIG. 3 is a sectional view showing a second conventional disc-molding die;
FIG. 4 is a sectional view showing a disc-molding die according to an embodiment of the present invention in a die-opened state; and
FIG. 5 is a sectional view showing the disc-molding die according to the embodiment of the present invention in a die-closed state.

### DESCRIPTION OF PREFERRED EMBODIMENT

An embodiment of the present invention will next be described in detail with reference to the drawings.

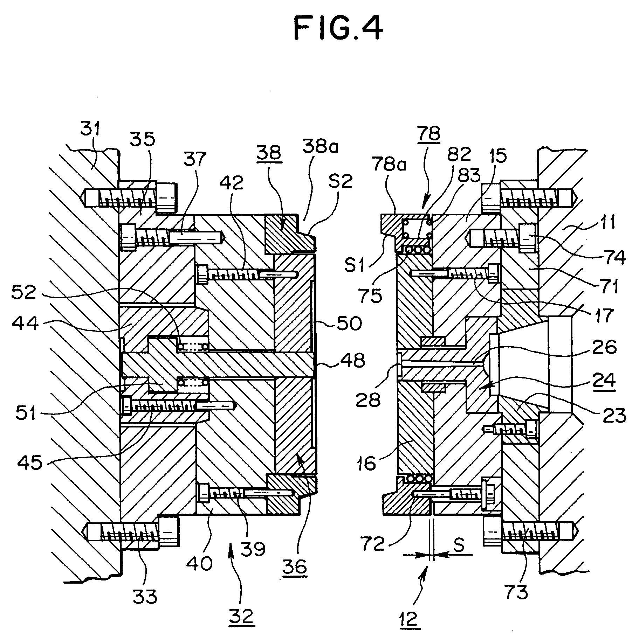

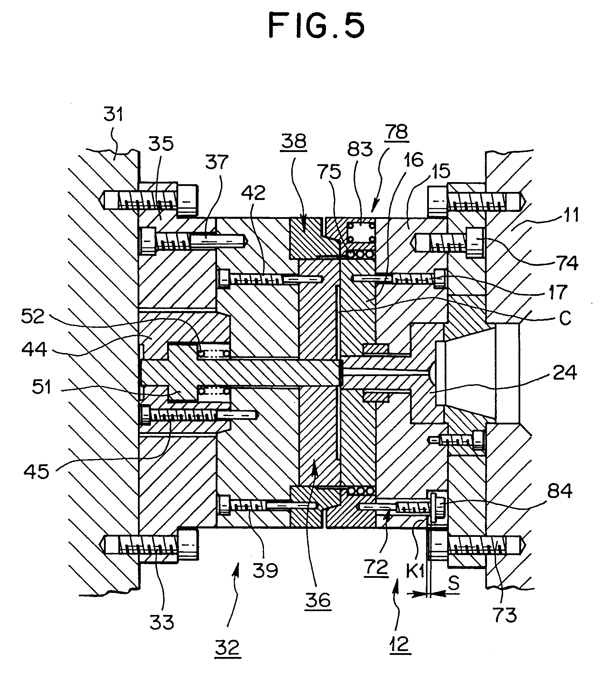

FIG. 4 is a sectional view showing a disc-molding die according to the embodiment of the present invention in a die-opened state, and FIG. 5 is a sectional view showing the disc-molding die according to the embodiment of the present invention in a die-closed state.

In FIGS. 4 and 5, numeral 12 denotes a stationary die assembly that is attached to a stationary platen 11 by use of bolts via an attachment plate 71. The stationary die assembly 12 is composed of a stationary-side base plate 15, a stationary-side disc plate 16, a stationary-side guide ring 78, a locating ring 23, and a sprue bush 24. The stationary-side disc plate 16 is fixed to the stationary-side base plate 15 by use of bolts 17 and serves as the stationary-side mirror-surface plate of the invention. The stationary-side guide ring 78 is disposed to surround the stationary-side disc plate 16 and adapted to position the stationary-side disc plate 16. The locating ring 23 is disposed on the stationary-platen-side of the stationary-side base plate 15 so as to locate the stationary-side base plate 15 with respect to the stationary platen 11. The sprue bush 24 is disposed adjacent to the locating ring 23.

At the center of the sprue bush 24 is formed a sprue 26 through which passes resin injected from an unillustrated injection nozzle. The sprue bush 24 is disposed such that its tip end faces a cavity C, and a die 28 is formed in the tip end surface.

The stationary-side base plate 15, the stationary-side disc plate 16, the locating ring 23, the sprue bush 24, and the stationary-side guide ring 78 are concentrically disposed. Notably, unillustrated stamper plate attachment/removal bushes, a stationary-side air-blow bush, and the like are disposed on the stationary die assembly 12. Numeral 73 denotes bolts for fixing the attachment plate 71 to the stationary platen 11. Numeral 74 denotes bolts for fixing the attachment plate 71 to the stationary-side base plate 15.

Meanwhile, numeral 32 denotes a movable die assembly that is attached to a movable platen 31. The movable die assembly 32 is composed of a movable-side base plate 35, an intermediate plate 40, a movable-side disc plate 36, a movable-side guide ring 38, a cylinder 44, and a cut punch 48. The intermediate plate 40 is fixed to the movable-side base plate 35 by use of bolts 37. The movable-side disc plate 36 is fixed to the intermediate plate 40 by use of bolts 42 and serves as the movable-side mirror-surface plate of the invention. The movable-side guide ring 38 is disposed to surround the movable-side disc plate 36 and is fixed to the intermediate plate 40 by use of bolts 39 to thereby position the movable-side disc plate 36 relative to the intermediate plate 40. The cylinder 44 is disposed within the movable-side base plate 35 so as to face the movable platen 31 and is fixed to the intermediate plate 40 by use of bolts 45. The cut punch 48 is advanced and retracted by the cylinder 44 and has a shape corresponding to the die 28.

Moreover, a depression 50 is formed on the surface of the movable-side disc plate 36 facing the stationary-side disc plate 16. Thus, when the movable platen 31 is moved toward the stationary platen 11 through an operation of an unillustrated die clamping apparatus so that the movable-side disc plate 36 and the stationary-side disc plate 16 can abut each other, the depression 50 forms a cavity C.

A piston 51 integrally formed with the cut punch 48 is reciprocatively movably disposed within the cylinder 44. An unillustrated fluid chamber is formed on the rear side (left-hand side in FIGS. 4 and 5) of the piston 51. On the front side (right-hand side in FIGS. 4 and 5) of the piston 51, a cut-punch returning spring 52 is disposed in order to urge the piston 51 rearward.

Accordingly, in the die-closed state, when the piston 51 is advanced (moved to the right in FIG. 5) through feed of a fluid into the fluid chamber, the cut punch 48 is advanced and enters the die 28. As a result, a hole is punched in an unillustrated disc substrate molded within the cavity C.

Unillustrated ejector bushes, ejector pins, a movable-side air-blow bush, and the like are also disposed on the movable die assembly 32.

An annular projection 78a is formed on the stationary-side guide ring 78 at its outer circumferential edge, while an annular depression 38a is formed on the movable-side guide ring 38 at its outer circumferential edge. The annular depression 38a is shaped so as to correspond to the annular projection 78a. The annular projection 78a and the annular depression 38a are formed so as to face each other. As shown in FIG. 5, when the movable platen 31 is advanced for die closing by means of the die clamping apparatus, press-fit engagement is established between a taper surface S1 formed on the stationary-side guide ring 78 and a taper surface S2 formed on the movable-side guide ring 38, thereby establishing alignment between the stationary-side guide ring 78 and the movable-side guide ring 38.

The taper surfaces S1 and S2 are each sloped 5 degrees relative to the axis of the disc-molding die. The taper surfaces S1 and S2 are ground and then lapped so as to establish complete fit therebetween when they are engaged. Subsequently, a solid lubrication film having a thickness of 1 µm to 2 µm is formed, as needed, on the taper surfaces S1 and S2.

In the present embodiment, in order to maintain alignment between the stationary die assembly 12 and the movable die assembly 32 over a predetermined stroke immediately after die opening begins from the die-closed state, the stationary-side guide ring 78 is supported so as to be movable relative to the stationary-side disc plate 16 and such that it can part from the stationary-side base plate 15.

To implement the above movement feature, a linear bearing 75, which serves as the support member of the invention, is disposed between the stationary-side guide ring 78 and the stationary-side disc plate 16 so as to support the stationary-side guide ring 78, thereby enabling the stationary-side guide ring 78 to move relative to the stationary-side disc plate 16. A groove 82 is formed in the stationary-side guide ring 78 in such a manner as to open onto the stationary-side base plate 15. A compression spring 83, which serves as the force application means of the invention, is accommodated within the groove 82. Accordingly, the compression spring 83 urges the stationary-side guide ring 78 toward the movable-side guide ring 38. The linear bearing 75 is press-fitted into the stationary-side guide ring 78 so that the stationary-side guide ring 78 can freely move relative to the stationary-side disc plate 16 when the disc-molding die is in a temperature-controlled state, i.e., during molding. Also, the load of the compression spring 83 is set such that the compression spring 83 can support the weight of the movable platen 31 and the movable die assembly 32 immediately after die opening begins.

A stop bolt 72, which serves as the restriction means of the invention, extends through the stationary-side base plate 15 and is fixed to the stationary-side guide ring 78 in order to restrict the amount of movement of the stationary-side guide ring 78. A head 84 of the stop bolt 72 is adapted to selectively engage a stepped portion K1 formed on the stationary-side base plate 15 at a predetermined position. Accordingly, in the die-opened state, the stationary-side guide ring 78 is urged toward the movable-side guide ring 38 by the compression spring 83, and the stepped portion K1 and the head 84 engage each other. In this case, a gap S (0.5 mm) is formed between the stationary-side guide ring 78 and the stationary-side base plate 15.

The gap S corresponds to a predetermined stroke that is set by means of the stop bolt 72. In the die-closed state, the movable-side guide ring 38 presses the stationary-side guide ring 78 toward the stationary platen 11 against a spring force of the compression spring 83, so that the stationary-side guide ring 78 abuts the stationary-side base plate 15. In this case, the gap S is formed between the stepped portion K1 and the head 84.

In the present embodiment, the stationary-side guide ring 78 is supported so as to be movable relative to the stationary-side disc plate 16. However, the movable-side guide ring 38 may be supported so as to be movable relative to the movable-side disc plate 36. Further, the stationary-side guide ring 78 and the movable-side guide ring 38 may be supported so as to be movable relative to the stationary-side disc plate 16 and the movable-side disc plate 36, respectively.

As described above, according to the present embodiment, in the die-opened state, the stationary-side guide ring 78 is advanced (moved to the left in FIG. 4) a distance of the gap S away from the stationary-side disc plate 16. Thus, during die closing, press-fit engagement begins between the taper surfaces S1 and S2, i.e., alignment begins between the stationary-die assembly 12 and the movable-die assembly 32, at a position corresponding to the gap S as measured ahead of completion of the die closing. Also, during die opening, the stationary-side guide ring 78 follows the movement of the movable-side guide ring 38 over a distance of the gap S as measured immediately after the die opening begins. During the follower movement, the press-fit engagement is maintained between the taper surfaces S1 and S2, so that the alignment is maintained between the stationary-die assembly 12 and the movable-die assembly 32.

Accordingly, the disc-molding die can mold a disc substrate which has highly dense and complex pits, grooves, etc. which are likely to cause transfer defects.

Also, even when the disc-molding die slightly opens along a parting line due to a resin pressure built within the cavity C, alignment is maintained between the stationary-die assembly 12 and the movable-die assembly 32, thereby maintaining parallelism between tile stationary-side disc plate 16 and the movable-side disc plate 36. Accordingly, a molded disc substrate has a uniform thickness.

Further, since alignment is still maintained between the stationary-die assembly 12 and the movable-die assembly 32 immediately after die opening begins, the die opening may be performed while the cut punch 48 is held in its advanced state.

Moreover, since guide posts, guide bushes, and the like are not used, the durability of the disc-molding die can be enhanced, and defect-free disc substrates can be molded.

The present invention is not limited to the above-described embodiment. Numerous modifications and variations of the present invention are possible in light of the spirit of the present invention, and they are not excluded from the scope of the present invention.

## Claims

1. A disc-molding die comprising:
(a) a stationary-side mirror-surface plate;
(b) a stationary-side guide ring attached to said stationary-side mirror-surface plate so as to surround said stationary-side mirror-surface plate and adapted to position said stationary-side mirror-surface plate;
(c) a movable-side mirror-surface plate adapted to define a cavity with said stationary-side mirror-surface plate; and
(d) a movable-side guide ring attached to said movable-side mirror-surface plate so as to surround said movable-side mirror-surface plate and adapted to position said movable-side mirror-surface plate and to effect alignment with said stationary-side guide ring, wherein,
(e) at least one of said stationary-side guide ring and said movable-side guide ring is supported so as to be movable relative to corresponding said mirror-surface plate and urged toward the other guide ring.

2. A disc-molding die according to Claim 1, further comprising force application means for urging at least one of said stationary-side guide ring and said movable-side guide ring toward the other guide ring.

3. A disc-molding die according to Claim 2, wherein said force application means is a compression spring accommodated in a groove that is formed in at least one of said stationary-side guide ring and said movable-side guide ring.

4. A disc-molding die according to Claim 1, still further comprising restriction means for restricting an amount of movement of at least one of said stationary-side guide ring and said movable-side guide ring to thereby set a movement stroke of at least one of said stationary-side guide ring and said movable-side guide ring.

5. A disc-molding die according to Claim 1, still further comprising a support member for supporting at least one of said stationary-side guide ring and said movable-side guide ring.
